# EUROPEAN PATENT APPLICATION

(11) **EP 3 498 521 A1**
(43) Date of publication of application: **19.06.2019**
(21) Application number: 17838648.8
(22) Date of filing: 04.08.2017
(51) Int. Cl.: B60L 11/18

(54) **ELECTRIC VEHICLE ENERGY MANAGEMENT SYSTEM, CONTROL METHOD THEREFOR, AND ELECTRIC VEHICLE**

(30) Priority: 08.08.2016 CN 201610645401
(71) Applicant: BYD Company Limited, Shenzhen 518118 (CN)
(72) Inventor: DENG, Linwang, Shenzhen Guangdong 518118 (CN); TENG, Jingcui, Shenzhen Guangdong 518118 (CN); WANG, Chao, Shenzhen Guangdong 518118 (CN); ZENG, Yu, Shenzhen Guangdong 518118 (CN); YANG, Shiqing, Shenzhen Guangdong 518118 (CN)
(74) Representative: Ziebig & Hengelhaupt Patentanwälte PartG mbB
(86) International application number: PCT/CN2017/096042
(87) International publication number: WO 2018/028518

(57) **Abstract**

The present invention discloses an energy management system of an electric vehicle, a control method therefor, and an electric vehicle. The system includes: a power battery including a plurality of battery modules; a plurality of balanced DC-DC converter modules, first ends of the balanced DC-DC converter modules being correspondingly connected to the battery modules and second ends of the balanced DC-DC converter modules being connected in parallel to a low-voltage direct-current bus; a bidirectional car charger having an alternating-current end configured to connect to a power grid/charging box, a first direct-current end connected to the low-voltage direct-current bus, and a second direct-current end connected to a high-voltage direct-current bus; a sampling module; and a control module configured to separately control each balanced DC-DC converter module according to the state information of each battery module, the state information of the low-voltage battery, the state information of the power battery and the load information of the low-voltage electric apparatuses to perform balancing management on the plurality of battery modules, supply power to the low-voltage electric apparatuses, and charge the low-voltage battery, and controlling the bidirectional car charger to supply power to the low-voltage electric apparatuses and charge the low-voltage battery. The system realizes the power supply to the low-voltage components of the entire vehicle, the balancing of the power battery and the redundancy design of key functions, and improves the safety and reliability of the system.

## Description

### FIELD

The present invention relates to the technical field of electric vehicles, in particular to an energy management system of an electric vehicle, an electric vehicle with the system and a control method for the energy management system of the electric vehicle.

### BACKGROUND

With the consumption of fossil energy, environmental pollution and the gradual improvement of people's awareness of environmental protection, as well as the introduction of new energy vehicle support policies by local governments, electric vehicles are becoming more and more popular with consumers.

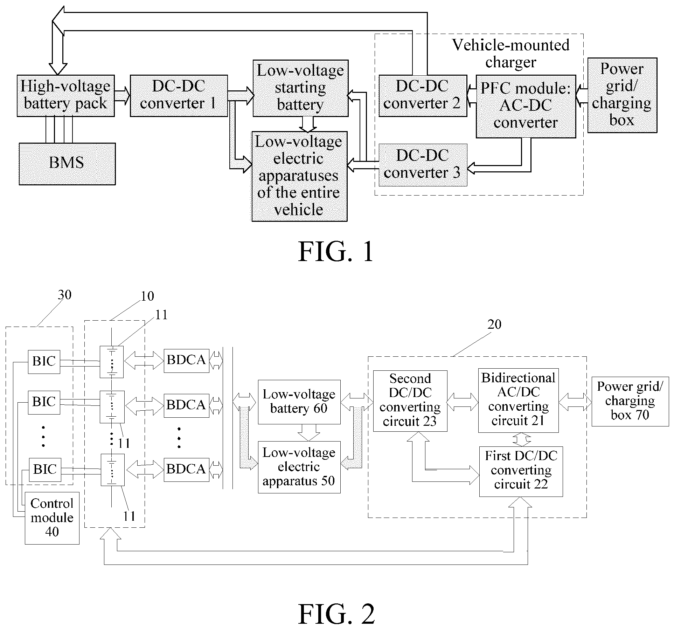

In the related art, an energy management system of an electric vehicle is as illustrated in Fig. 1, which mainly includes the following modules:
(1) a high-voltage battery pack, configured to store electric energy of the electric vehicle and provide power for the entire vehicle;
(2) a BMS (Battery Management System), configured to monitor and manage the high-voltage battery pack;
(3) a DC-DC converter 1, configured to convert the high-voltage power of the high-voltage battery pack into low-voltage power to supply power to low-voltage electric apparatuses (such as 12 V or 24 V) of the entire vehicle, and charge a low-voltage starting battery;
(4) a car charger, usually including a PFC module, a DC-DC converter 2 and a DC-DC converter 3, and configured to convert the alternating current of the grid/charging box into high-voltage direct current to charge the high-voltage battery pack, and simultaneously convert it into low-voltage power through the DC-DC converter 3 to supplement power to the low-voltage starting battery.

However, the high-voltage battery pack is formed by many cells by means of series connection, parallel connection and other ways. Due to factors such as battery manufacturing processes and materials, there are more or less differences in the capacity, self-discharge, internal resistance and other performance parameters of the battery. These differences are manifested by the deterioration of battery consistency under the effects of environmental temperature and uneven external forces such as heat dissipating (heated) conditions of the battery pack, which reduces the available capacity of the battery pack. This requires the BMS to balance the cells that affect the consistency of the battery pack while managing the energy of the battery pack, in order to achieve maximum energy output. In the related art, a mode that a plurality of cells share one balancing circuit is adopted, and the balancing of different cells is realized through a gating circuit. The disadvantages are as follows: the control of the gating circuit is complex; and because the distribution of the cells that need to be balanced is random, when a plurality of cells are in the battery pack in which the balancing circuit is shared, the balancing ability will be greatly weakened, and the balancing circuit is single in purpose.

In addition, the DC-DC converter 1 is the power source of the low-voltage system of the entire vehicle. When the DC-DC converter 1 fails or fails to work properly, the entire vehicle will not run normally. At the same time, the input end of the DC-DC converter 1 is a direct-current bus of the high-voltage battery pack, the voltage of which is generally several hundred volts, which has a high requirement on voltage withstanding and insulating abilities of devices in the circuit. Moreover, in practical use, the power density of the DC-DC converter 1 is high and the heating value is large, thus it needs to dissipate heat by adopting a large-flow-rate forced air cooling or liquid cooling method, and the realization of the heat dissipation solution is more complex.

### SUMMARY

The present invention aims at solving at least one of the technical problems in the related art to a certain extent.

Therefore, a first objective of the present invention is to provide an energy management system of an electric vehicle, which realizes the power supply to the low-voltage components of the entire vehicle, the balancing of the power battery and the redundancy design of key functions, and improves the safety and reliability of the system.

A second objective of the present invention is to provide an electric vehicle.

A third objective of the present invention is to provide a control method for an energy management system of an electric vehicle.

In order to realize the above-mentioned objectives, an embodiment of a first aspect of the present invention provides an energy management system of an electric vehicle, including: a power battery, the power battery including a plurality of battery modules; a plurality of balanced DC-DC converter modules, first ends of the balanced DC-DC converter modules being correspondingly connected to the battery modules, and second ends of the balanced DC-DC converter modules being connected in parallel to a low-voltage direct-current bus to respectively supply power to low-voltage electric apparatuses of the electric vehicle and charge a low-voltage battery through the low-voltage direct-current bus; a bidirectional car charger, an alternating-current end of the bidirectional car charger being configured to connect to a power grid/charging box, a first direct-current end of the bidirectional car charger being connected to the low-voltage direct-current bus, and a second direct-current end of the bidirectional car charger being connected to a high-voltage direct-current bus, where the high-voltage direct-current bus is connected to the power battery; a sampling module, the sampling module being configured to sample the state information of each battery module, the state information of the low-voltage battery, the state information of the power battery and the load information of the low-voltage electric apparatuses; and a control module, configured to separately control each balanced DC-DC converter module according to the state information of each battery module, the state information of the low-voltage battery, the state information of the power battery and the load information of the low-voltage electric apparatuses to perform balancing management on the plurality of battery modules, supply power to the low-voltage electric apparatuses, and charge the low-voltage battery, and controlling the bidirectional car charger to supply power to the low-voltage electric apparatuses and charge the low-voltage battery.

The energy management system of the electric vehicle according to this embodiment of the present invention realizes the power supply to the low-voltage components of the entire vehicle, the balancing of the power battery and the redundancy design of key functions, and improves the safety and reliability of the system.

In order to realize the above-mentioned objectives, an embodiment of a second aspect of the present invention provides an electric vehicle, including the energy management system of the electric vehicle.

The electric vehicle provided by this embodiment of the present invention, by adopting the energy management system of the electric vehicle, can realize the power supply to the low-voltage components of the entire vehicle, the balancing of the power battery and the redundancy design of key functions, and improve the safety and reliability of the system.

In order to realize the above-mentioned purposes, an embodiment of a third aspect of the present invention provides a control method for an energy management system of an electric vehicle, where the energy management system of the electric vehicle includes a power battery, a plurality of balanced DC-DC converter modules and a bidirectional car charger, the power battery includes a plurality of battery modules, first ends of the balanced DC-DC converter modules are correspondingly connected to the battery modules, second ends of the plurality of balanced DC-DC converter modules are connected in parallel to a low-voltage direct-current bus to respectively supply power to low-voltage electric apparatuses of the electric vehicle and charge a low-voltage battery through the low-voltage direct-current bus, an alternating-current end of the bidirectional car charger is configured to connect to a power grid/charging box, a first direct-current end of the bidirectional car charger is connected to the low-voltage direct-current bus, a second direct-current end of the bidirectional car charger is connected to a high-voltage direct-current bus, the high-voltage direct-current bus is connected to the power battery, and the method includes the following steps: sampling the state information of each battery module, the state information of the low-voltage battery and the state information of the power battery, and sampling the load information of the low-voltage electric apparatuses; and respectively controlling each balanced DC-DC converter module according to the state information of each battery module, the state information of the low-voltage battery, the state information of the power battery and the load information of the low-voltage electric apparatuses to perform balancing management on the plurality of battery modules, supply power to the low-voltage electric apparatuses, and charge the low-voltage battery, and controlling the bidirectional car charger to supply power to the low-voltage electric apparatuses and charge the low-voltage battery.

The control method for the energy management system of the electric vehicle according to this embodiment of the present invention samples the state information of each battery module, the state information of the low-voltage battery, the state information of the power battery and the load information of the low-voltage electric apparatuses in real time, then respectively controls each balanced DC-DC converter module according to the state information of each battery module, the state information of the low-voltage battery, the state information of the power battery and the load information of the low-voltage electric apparatuses to perform balancing management on the plurality of battery modules, supply power to the low-voltage electric apparatuses, and charge the low-voltage battery, and controls the bidirectional car charger to supply power to the low-voltage electric apparatuses and charge the low-voltage battery, thus realizing the power supply to the low-voltage components of the entire vehicle, the balancing of the power battery and the redundancy design of key functions, and improving the safety and reliability of the system.

### BRIEF DESCRIPTION OF THE DRAWINGS

Fig. 1 is a block diagram of an energy management system of an electric vehicle in the related art;
Fig. 2 is a block diagram of an energy management system of an electric vehicle according to an embodiment of the present invention;
Fig. 3 is a block diagram of an energy management system of an electric vehicle according to another embodiment of the present invention;
Fig. 4 is a circuit diagram of a bidirectional car charger according to an embodiment of the present invention;
Fig. 5 is a circuit diagram of a balanced DC-DC converter module according to an embodiment of the present invention;
Fig. 6 is a circuit diagram of a battery management system according to an embodiment of the present invention;
Fig. 7 is a power supply and balancing flowchart during discharging of an electric vehicle according to an embodiment of the present invention;
Fig. 8 is a power supply and balancing flowchart during charging of an electric vehicle according to an embodiment of the present invention;
Fig. 9 is a flowchart of a control method for an energy management system of an electric vehicle according to an embodiment of the present invention; and
Fig. 10 is a block diagram of an electric vehicle according to an embodiment of the present invention.

### DETAILED DESCRIPTION

The following describes in detail embodiments of the present invention. Examples of the embodiments are shown in the accompanying drawings, where reference signs that are the same or similar from beginning to end represent same or similar components or components that have same or similar functions. The following embodiments described with reference to the accompanying drawings are exemplary, which are used only to explain the present invention, and cannot be construed as a limitation to the present invention.

An energy management system of an electric vehicle, an electric vehicle with the system and a control method for the energy management system of the electric vehicle provided by the embodiments of the present invention will be described below with reference to the drawings.

Fig. 2 is a block diagram of an energy management system of an electric vehicle according to an embodiment of the present invention.

As illustrated in Fig. 2, the energy management system of the electric vehicle includes a power battery 10, a plurality of balanced DC-DC converter modules BDCA, a bidirectional car charger 20, a sampling module 30 and a control module 40.

Herein, the power battery 10 includes a plurality of battery modules 11. First ends of the balanced DC-DC converter modules BDCA are correspondingly connected to the battery modules 11, and second ends of the balanced DC-DC converter modules BDCA are connected in parallel to a low-voltage direct-current bus to respectively supply power to low-voltage electric apparatuses 50 of the electric vehicle and charge a low-voltage battery 60 through the low-voltage direct-current bus. An alternating-current end of the bidirectional car charger 20 is configured to connect to a power grid/charging box 70, a first direct-current end of the bidirectional car charger 20 is connected to the low-voltage direct-current bus, and a second direct-current end of the bidirectional car charger 20 is connected to a high-voltage direct-current bus, where the high-voltage direct-current bus is connected to the power battery 10.

The sampling module 30 is configured to sample the state information of each battery module 11, the state information of the low-voltage battery 60, the state information of the power battery 10 and the load information of the low-voltage electric apparatuses 50. The control module 40 is configured to separately control each balanced DC-DC converter module BCDA according to the state information of each battery module 11, the state information of the low-voltage battery 60, the state information of the power battery 10 and the load information of the low-voltage electric apparatuses 50 to perform balancing management to the plurality of battery modules 11, supply power to the low-voltage electric apparatuses 50, and charge the low-voltage battery 60, and controlling the bidirectional car charger 20 to supply power to the low-voltage electric apparatuses 50 and charge the low-voltage battery 60.

Specifically, as illustrated in Fig. 2, the power battery 10 consists of a plurality of battery modules 11 connected in series, and the voltage of each battery module 11 is about 2.5 V to 3.6 V. Each battery module 11 is connected to one balanced DC-DC converter module BDCA, and the second ends of the plurality of balanced DC-DC converter modules BDCA are connected in parallel to output low voltage such as 12 V to supply power to the low-voltage electric apparatuses 50 and charge the low-voltage battery 60.

The sampling module 30 includes a plurality of battery information collectors BIC, and each battery module 11 is connected to one battery information collector BIC. In the normal operation of the entire vehicle, the battery information collectors BIC sample the state information of each battery module 11 in real time. At the same time, he sampling module 30 further samples the state information of the low-voltage battery 60, the state information of the power battery 10 and the load information of the low-voltage electric apparatuses 50 in real time, and transmits the collected information to the control module 40, where the state information includes voltage, current, temperature, etc.

The control module 40 controls the plurality of balanced DC-DC converter modules BDCA according to the power requirement of the low-voltage electric apparatuses 50. The plurality of balanced DC-DC converter modules BDCA jointly provide the power consumed by the low-voltage electric apparatuses 50. At the same time, the control module 40 further adjusts the output current of the plurality of balanced DC-DC converter modules BDCA in real time according to the load information of the low-voltage electric apparatuses 50 and the state information of each battery module 11. When the output current of a certain balanced DC-DC converter module BDCA is greater than the average value, it is equivalent to discharge balancing for the battery module 11; and when the output current of a certain balanced DC-DC converter module BDCA is less than the average value, it is equivalent to charge balancing for the battery module.

In addition, when the load of the low-voltage electric apparatuses 50 is large, or when a plurality of balanced DC-DC converter modules BDCA are abnormal, the control module 40 can control the bidirectional car charger 20 to convert the high voltage of the power battery 10 into low voltage to supply power to the low-voltage electric apparatuses 50 and charge the low-voltage battery 60 through the bidirectional car charger 20; or, to supply power to the low-voltage electric apparatuses 50 and charge the low-voltage battery 60 simultaneously through the bidirectional car charger 20 and the balanced DC-DC converter modules BDCA without abnormality.

Therefore, the energy management system of the electric vehicle provided by this embodiment of the present invention not only can realize the function that the high-voltage DC-DC converters supply power to the low-voltage electronic components and electric apparatuses of the entire vehicle, but also can realize the function of energy management on the power battery. At the same time, it can also supply power to the low-voltage electric apparatuses and charge the low-voltage battery through the bidirectional car charger, such that the electric vehicle no longer needs an independent high-voltage DC-DC converter configured to supply power to the low-voltage electronic components and electric apparatuses, and no longer needs a BMS with a special balancing circuit, and the redundancy design of the low-voltage power supply function is realized. In addition, due to the parallel power supply of the plurality of balanced DC-DC converter modules, when a small number of balanced DC-DC converter modules are damaged, it does not affect the power supply to the low-voltage electric apparatuses, thus improving the reliability of low-voltage power consumption of the entire vehicle. In addition, the plurality of balanced DC-DC converter modules can be miniaturized and installed separately, thus reducing the heating density, facilitating the simplification of heat dissipation solution, and facilitating the extension and compatibility.

According to an embodiment of the present invention, the plurality of balanced DC-DC converter modules BDCA, the sampling module 30 and the control module 40 may be integrated into a battery management system BMS.

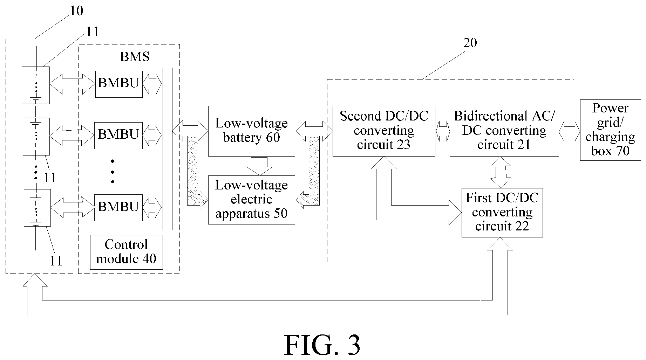

Specifically, as illustrated in Fig. 3, the balanced DC-DC converter modules BDCA and the battery information collectors BIC may be integrated together to form a battery management and balancing unit BMBU, and then be integrated with the control module 40 into a battery management system BMS.

According to an embodiment of the present invention, as illustrated in Fig. 2 or 3, the bidirectional car charger 20 includes: a bidirectional AC/DC converting circuit 21, a first DC/DC converting circuit 22 and a second DC/DC converting circuit 23, where an alternating-current end of the bidirectional AC/DC converting circuit 21 is the alternating-current end of the bidirectional car charger 20; a first direct-current end of the first DC/DC converting circuit 22 is connected to the direct-current end of the bidirectional AC/DC converting circuit 21, and a second direct-current end of the first DC/DC converting circuit 22 is the second direct-current end of the bidirectional car charger 20; and a first direct-current end of the second DC/DC converting circuit 23 is separately connected to the direct-current end of the bidirectional AC/DC converting circuit 21 and the first direct-current end of the first DC/DC converting circuit 22, and a second direct-current end of the second DC/DC converting circuit 23 is the first direct-current end of the bidirectional car charger 20.

Herein, the control module 40 controls the bidirectional AC/DC converting circuit 21, the first DC/DC converting circuit 22 and the second DC/DC converting circuit 23 to realize any one of a power battery 10 charging function, a low-voltage battery 60 charging function, a power battery 10 to alternating current inverting function, a low-voltage battery 60 to alternating current inverting function and a power battery 10 output low-voltage loading function.

Further, the control module 40 is further configured to control the bidirectional AC/DC converting circuit 21, the first DC/DC converting circuit 22 and the second DC/DC converting circuit 23 to realize the power battery 10 charging function and the low-voltage battery 60 charging function, or the power battery 10 to alternating current inverting function and the power battery 10 output low-voltage loading function, or the power battery 10 to alternating current inverting function and the low-voltage battery 60 to alternating current inverting function.

Specifically, the bidirectional AC/DC converting circuit 21 may convert alternating current output from the power grid/charging box 70 into direct current such as 380 V to 400 V, and may also convert direct current into alternating current; the second DC/DC converting circuit 23 may convert direct current output from the bidirectional AC/DC converting circuit 21 into low voltage such as 12 V to supply power to the low-voltage electric apparatuses 50 and charge the low-voltage battery 60, and may also convert low voltage into high-voltage alternating current; and the first DC/DC converting circuit 22 may convert the direct current output from the bidirectional AC/DC converting circuit 21 into high voltage to charge the entire power battery 10, and may also convert the high voltage of the power battery 10 into direct current such as 380 V to 400 V for other purposes.

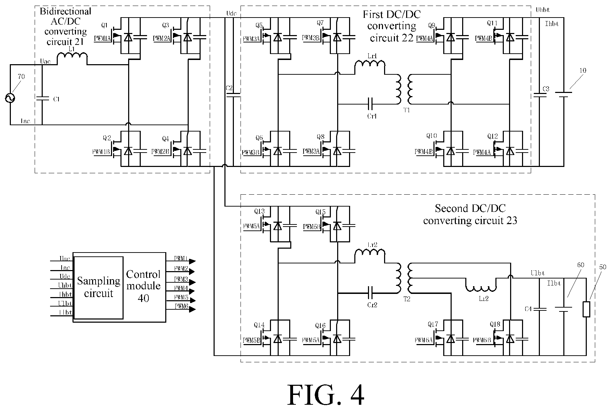

That is to say, the low-voltage battery 60 charging function and the alternating current inverting function can be realized through the bidirectional AC/DC converting circuit 21 and the second DC/DC converting circuit 23, the power battery 10 charging function and the alternating current inverting function can be realized through the bidirectional AC/DC converting circuit 21 and the first DC/DC converting circuit 22, and the power battery 10 output low-voltage loading function can be realized through the first DC/DC converting circuit 22 and the second DC/DC converting circuit 23. Moreover, by controlling the bidirectional AC/DC converting circuit 21, the first DC/DC converting circuit 22 and the second DC/DC converting circuit 23, the power battery 10 and the low-voltage battery 60 can be charged at the same time, or the high voltage of the power battery 10 and the low voltage of the low-voltage battery 60 can be inverted to alternating current, or the high voltage of the power battery 10 can be inverted to alternating current and the second DC/DC converting circuit 23 outputs low voltage to supply power to the low-voltage electric apparatuses 60 or charge the low-voltage battery 60. For details of the circuit of the bidirectional car charger 20, see Fig. 4, which are not described here in detail.

The energy management system of the electric vehicle provided by this embodiment of the present invention realizes the functional diversification of the bidirectional car charger through the control on the multifunctional bidirectional AC/DC converting circuit, the first DC/DC converting circuit and the second DC/DC converting circuit, not only can work during parking and charging, but also can work when the entire vehicle is running, thus effectively improving the utilization rate of the bidirectional car charger, and avoiding the cost waste caused by idling.

According to an embodiment of the present invention, in the charging process of the electric vehicle, the control module 40 controls the bidirectional AC/DC converting circuit 21, the second DC/DC converting circuit 23 and each balanced DC-DC converter module BDCA such that each balanced DC-DC converter module BDCA charges the corresponding battery module 11 and performs balancing management on the plurality of battery modules 11, and simultaneously controls the bidirectional AC/DC converting circuit 21 and the first DC/DC converting circuit 22 to charge the power battery 10.

Further, in the inverting-discharging process of the electric vehicle, the control module 40 controls the first DC/DC converting circuit 22 and the bidirectional AC/DC converting circuit 21 to realize the power battery 10 to alternating current inverting function and/or controls the plurality of balanced DC-DC converter modules BDCA, the second DC/DC converting circuit 23 and the bidirectional AC/DC converting circuit 21 to realize the power battery 10 to alternating current inverting function, where when the plurality of balanced DC-DC converter modules BDCA, the second DC/DC converting circuit 23 and the bidirectional AC/DC converting circuit 21 are controlled to realize the power battery 10 to alternating current inverting function, the balancing management on the plurality of battery modules 11 is further realized.

That is to say, in the charging process of the entire vehicle, the bidirectional AC/DC converting circuit 21 converts the alternating current of the power grid/charging box 70 into direct current, which is then converted into low voltage such as 12 V through the second DC/DC converting circuit 23 to charge each battery module 11, at the same time each battery module 11 is balanced intelligently, and the entire power battery 10 may also be charged directly through the first DC/DC converting circuit 22; and meanwhile, both of them may be charged in parallel and balanced intelligently, and thus not only can the charging power be improved, but also the balancing efficiency can be improved.

In the inverting-discharging process of the entire vehicle, the high voltage of the power battery 10 may be converted into direct current such as 380 V to 400 V through the first DC/DC converting circuit 22, which is then converted into alternating current through the bidirectional AC/DC converting circuit 21 to supply power to the power grid or load; and the voltage output from the plurality of battery modules 11 may also be converted into direct current such as 380 V to 400 V through the plurality of balanced DC-DC converter modules BDCA and the second DC/DC converting circuit 23, which is then converted into alternating current through the bidirectional AC/DC converting circuit 21 to supply power to the power grid or load, and at the same time each battery module 11 is intelligently balanced.

Therefore, the energy management system of the electric vehicle provided by this embodiment of the present invention can simultaneously have the functions of intelligent balancing and bidirectional inversion, and can realize charging of a single battery module in the power battery, and can also charge the entire power battery. When a single battery module is damaged, it does not affect the overall function, thus the redundancy design of key functions is realized, the reliability of the entire vehicle is improved, and the charging power can be doubled. In addition, when the voltage of the power battery is pulled up, only the withstand voltage of the first DC/DC converting circuit needs to be pulled up, the energy conversion between low voltages is realized, and the voltage stress of the device is decreased.

According to an embodiment of the present invention, in the discharging process of the electric vehicle, the control module 40 further determines whether the low-voltage battery 60 is in an under-voltage state according to the state information of the low-voltage battery 60, where if the low-voltage battery 60 is in an under-voltage state, the control module 40 controls the plurality of balanced DC-DC converter modules BDCA to charge the low-voltage battery 60; if the low-voltage battery 60 is not in an under-voltage state, the control module 40 further determines whether the power battery 10 is in an under-voltage state according to the state information of the power battery 10; and if the power battery 10 is in an under-voltage state, the control module 40 prohibits the power battery 10 from discharging.

Further, when the power battery 10 is not in an under-voltage state, the control module 40 controls the power battery 10 to supply power to the electric vehicle, controls the plurality of balanced DC-DC converter modules BDCA to supply power to the low-voltage electric apparatuses 50, samples the output voltage and output current of each balanced DC-DC converter module BDCA, and calculates the total supply current to the low-voltage electric apparatuses 50.

According to an embodiment of the present invention, the control module 40 is further configured to calculate a maximum allowable supply current of the plurality of balanced DC-DC converter modules BDCA according to the output current of each balanced DC-DC converter module BDCA, and determining whether the output voltage of each balanced DC-DC converter module BDCA is pulled down and whether the total supply current to the low-voltage electric apparatuses 50 exceeds the maximum allowable supply current, where if the output voltage of each balanced DC-DC converter module BDCA is pulled down and the total supply current to the low-voltage electric apparatuses 50 exceeds the maximum allowable supply current, the control module 40 controls the first DC/DC converting circuit 22 and the second DC/DC converting circuit 23 such that the power battery 10 simultaneously supplies power to the low-voltage electric apparatuses 50, and when an alternating current discharging demand instruction is received, controls the bidirectional AC/DC converting circuit 21 to work such that the power battery 10 performs alternating current discharging simultaneously through the first DC/DC converting circuit 22 and the bidirectional AC/DC converting circuit 21.

Specifically, when the entire vehicle is powered on, whether the low-voltage battery 60 is in an under-voltage state is determined. If it is in an under-voltage state, the low-voltage system of the entire vehicle will not work properly. In this case, it is necessary to start the plurality of balanced DC-DC converter modules BDCA to output low voltage such as 12 V to supplement power to the low-voltage battery 60. When the electric quantity of the low-voltage battery 60 reaches a certain value, the low-voltage system of the entire vehicle is started. Then, the sampling module 30 samples the state information of the power battery 10 and transmits it to the control module 40. The control module 40 determines whether the power battery 10 can discharge. If the voltage of the power battery 10 is relatively low, the power battery 10 is prohibited from discharging and an alarm is given out to prompt the user to charge. If the power battery 10 can discharge, power may be supplied to the low-voltage electric apparatuses 50 through the plurality of balanced DC-DC converter modules BDCA.

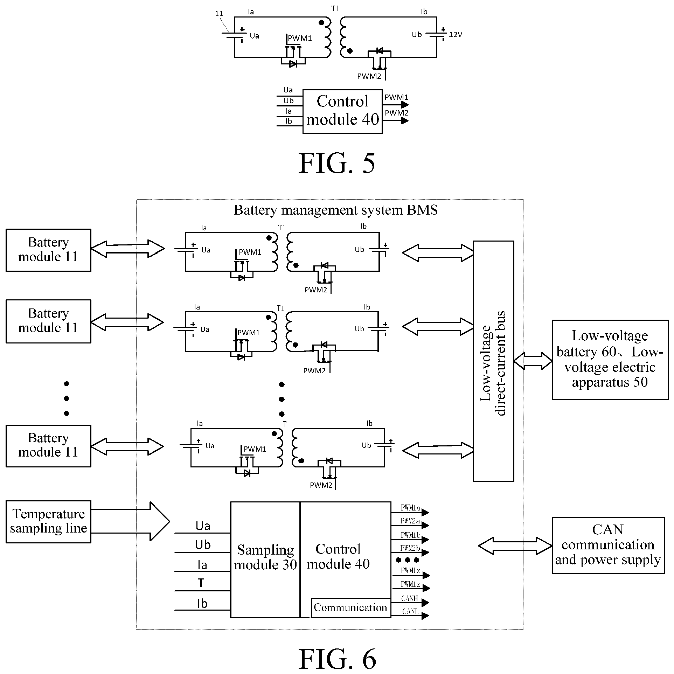

As a specific example of the present invention, the circuit structure of each balanced DC-DC converter module BDCA is illustrated in Fig. 5. The control module 40 controls a switch tube to convert the voltage of the battery module 11 into low voltage such as 12 V to supply power to the low-voltage electric apparatuses 50. Further, when the plurality of balanced DC-DC converter modules BDCA, the sampling module 30 and the control module 40 are integrated into a battery management system BMS, the circuit diagram is illustrated in Fig. 6, which is not described here in detail.

When the plurality of balanced DC-DC converter modules BDCA supply power to the low-voltage electric apparatuses 50, the sampling module 30 samples the output voltage Ub and output current Ib of each balanced DC-DC converter module BDCA in real time, determines whether the sum of the output current of the plurality of balanced DC-DC converter modules BDCA can satisfy the use of the entire vehicle, and simultaneously determines whether the output voltage Ub of each balanced DC-DC converter module BDCA is too low. If the sum of the output current of the plurality of balanced DC-DC converter modules BDCA cannot satisfy the use of the entire vehicle, i.e., the maximum allowable supply current Imax of the balanced DC-DC converter modules BDCA is less than the total supply current Isum to the low-voltage electric apparatuses 50, and the output voltage Ub of each balanced DC-DC converter module BDCA is too low, the control module 40 controls the first DC/DC converting circuit 22 and the second DC/DC converting circuit 23 to work to convert the high voltage of the power battery 10 into low voltage such as 12 V to supply power to the low-voltage electric apparatuses 50. In the process of supplying power to the low-voltage electric apparatuses 50, if an alternating current discharging demand instruction is received, the control module 40 controls the first DC/DC converting circuit 22 and the AC/DC converting circuit 21 to work to convert the high voltage of the power battery 10 into alternating current to output.

Further, according to an embodiment of the present invention, the control module 40 is further configured to calculate the average voltage and average current of the plurality of balanced DC-DC converter modules BDCA, and compare the average voltage with the voltage of each battery module 11. If the average voltage is equal to the voltage of any battery module 11, the control module 40 controls the balanced DC-DC converter module BDCA corresponding to the battery module 11 to output with the average current; if the voltage of any battery module 11 is greater than the average voltage, the control module 40 controls the balanced DC-DC converter module BDCA corresponding to the battery module 11 to output with first current, where the first current = the average current Im+K^{∗}|Ua-Um|, Ua is the voltage of the battery module 11, Um is the average voltage, and K is an adjustment coefficient; and if the voltage of any battery module 11 is less than the average voltage, the control module 40 controls the balanced DC-DC converter module BDCA corresponding to the battery module 11 to output with second current, where the second current = the average current Im-K^{∗}|Ua-Um|.

That is to say, when the power is supplied to the low-voltage electric apparatuses 50 by the plurality of DC-DC converter modules BDCA, the plurality of battery modules 111 are further intelligently balanced. The balancing process is as follows: the voltage Ua of each battery module 11 is sampled through the sampling module 30, and the average voltage Um and the average output current Im of the plurality of balanced DC-DC converter modules BDCA are calculated. If Ua=Um, the output current of a single balanced DC-DC converter module BDCA is Im; if Ua > Um, the output current of the corresponding balanced DC-DC converter module BDCA is Im+K^{∗}|Ua-Um|; and if Ua < Um, the output current of the corresponding balanced DC-DC converter module BDCA is Im-K^{∗}|Ua-Um|, where K is obtained through proportional-integral operation.

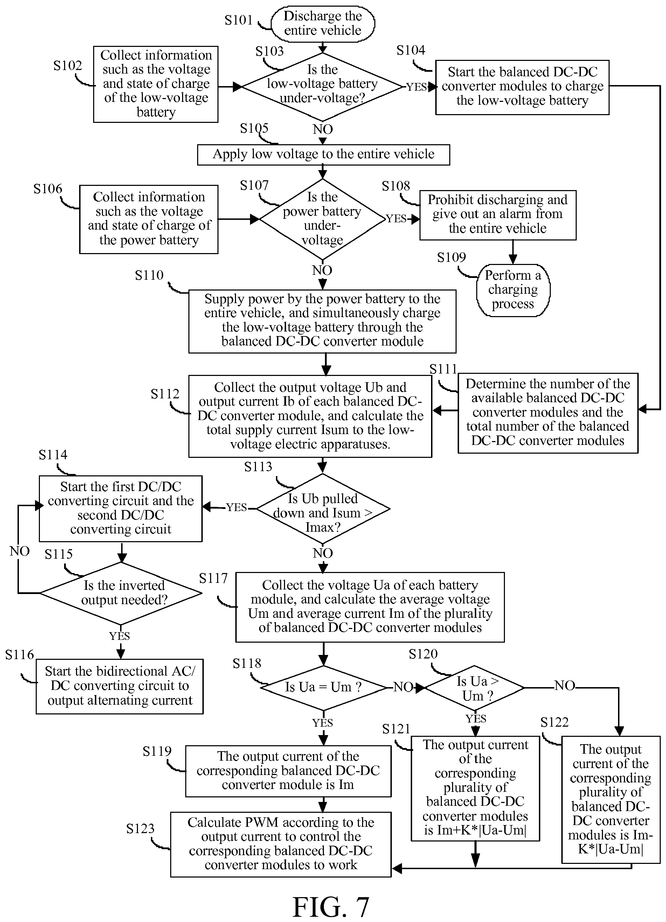

Fig. 7 is a power supply and balancing flowchart during discharging of an electric vehicle according to an embodiment of the present invention. As illustrated in Fig. 7, the discharging process of the electric vehicle may include the following steps:
S101. Discharge the entire vehicle.
S102. Collect information such as the voltage and state of charge of the low-voltage battery.
S103. Determine whether the low-voltage battery is under-voltage. If yes, execute step S104; and if not, execute step S105.
S104. Start the balanced DC-DC converter modules to charge the low-voltage battery.
S105. Apply low voltage to the entire vehicle.
S106. Collect information such as the voltage and state of charge of the power battery
S107. Determine whether the power battery is under-voltage. If yes, execute step S108; and if not, execute step S110.
S108. Prohibit discharging and give out an alarm from the entire vehicle.
S109. Perform a charging process.
S110. Supply power by the power battery to the entire vehicle, and simultaneously charge the low-voltage battery through the balanced DC-DC converter modules.
Sill. Determine the number of the available balanced DC-DC converter modules and the total number of the balanced DC-DC converter modules.
S112. Collect the output voltage Ub and output current Ib of each balanced DC-DC converter module, and calculate the total supply current Isum to the low-voltage electric apparatuses.
S113. Determine whether Ub is pulled down and whether Isum > Imax is established. If yes, execute step S114; and if not, execute step S117.
S114. Start the first DC/DC converting circuit and the second DC/DC converting circuit.
S115. Determine whether the inverted output is needed. If yes, execute step S116; and if not, execute step S114.
S116. Start the bidirectional AC/DC converting circuit to output alternating current.
S117. Collect the voltage Ua of each battery module, and calculate the average voltage Um and average current Im of the plurality of balanced DC-DC converter modules.
S118. Determine whether Ua = Um is established. If yes, execute step S119; and if not, execute step S120.
S119. The output current of the corresponding balanced DC-DC converter module is Im.
S120. Determine whether Ua > Um is established. If yes, execute step S121; and if not, execute step S122.
S121. The output current of the corresponding plurality of balanced DC-DC converter modules is Im+K^{∗}|Ua-Um|.
S122. The output current of the corresponding plurality of balanced DC-DC converter modules is Im-K^{∗}|Ua-Um|.
S123. Calculate PWM according to the output current to control the corresponding balanced DC-DC converter modules to work.

According to an embodiment of the present invention, in the charging process of the electric vehicle, the control module 40 further determines whether the low-voltage battery 60 is in an under-voltage state according to the state information of the low-voltage battery, where if the low-voltage battery 60 is in an under-voltage state, the control module 40 controls the bidirectional AC/DC converting circuit 21 and the second DC/DC converting circuit 23 such that the power grid/charging box 70 charges the low-voltage battery 60 through the bidirectional AC/DC converting circuit 21 and the second DC/DC converting circuit 23; and if the low-voltage battery 60 is not in an under-voltage state, the control module 40 further determines whether the power battery 10 needs to be charged according to the state information of the power battery 10, and when the power battery 10 needs to be charged, controls the bidirectional AC/DC converting circuit 21 and the first DC/DC converting circuit 22 such that the power grid/charging box 70 charges the power battery 10 through the bidirectional AC/DC converting circuit 21 and the first DC/DC converting circuit 22.

Further, the control module 40 is further configured to calculate the average voltage and average current of the plurality of balanced DC-DC converter modules BDCA by sampling the output voltage and output current of each balanced DC-DC converter module BDCA, and compare the average voltage with the voltage of each battery module 11. If the voltage of any battery module 11 is greater than the average voltage, the control module 40 controls the balanced DC-DC converter module BDCA corresponding to the battery module 11 to output with the first current, where the first current = the average current Im+K^{∗}|Ua-Um|.

According to an embodiment of the present invention, the control module 40 is further configured to calculate the discharge current of the plurality of balanced DC-DC converter modules BDCA according to the output current of each balanced DC-DC converter module BDCA, calculate the total supply current to the low-voltage electric apparatuses 50, and when the discharge current of the plurality of balanced DC-DC converter modules BDCA is greater than the total supply current, control the second DC/DC converting circuit 23 to stop working.

Specifically, when the entire vehicle is charged, it is also necessary to determine whether the low-voltage battery 60 is in an under-voltage state. If it is in an under-voltage state, the low-voltage system of the entire vehicle will not work normally. In this case, the bidirectional AC/DC converting circuit 21 and the second DC/DC converting circuit 23 need to be started to supplement power to the low-voltage battery 60. When the electric quantity of the low-voltage battery 60 reaches a certain value, the low-voltage system of the entire vehicle is started, and whether the power battery 10 needs to be charged is determined. If needed, the bidirectional AC/DC converting circuit 21 and the first DC/DC converting circuit 22 are started to charge the power battery 10.

In the charging process of the power battery 10, the plurality of battery modules 11 are further intelligently balanced. The balancing process is as follows: the voltage Ua of each battery module 11 is sampled through the sampling module 30, and the average voltage Um and the average output current Im of the plurality of DC-DC converter modules BDCA are calculated. If Ua ≤ Um, it is balanced; and if Ua > Um, the output current of the corresponding balanced DC-DC converter module BDCA is Im+K^{∗}|Ua-Um|. In addition, the control module 40 further determines whether the discharge current of the plurality of balanced DC-DC converter modules BDCA is greater than the total supply current Isum to the low-voltage electric apparatuses 50, and if yes, the second DC/DC converting circuit 23 is controlled to stop working.

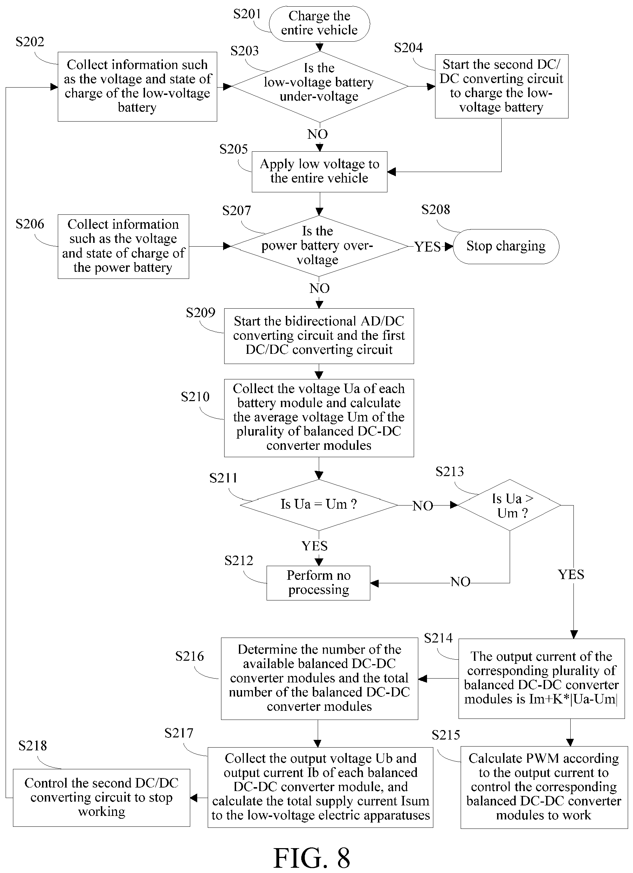

Fig. 8 is a power supply and balancing flowchart during charging of an electric vehicle according to an embodiment of the present invention. As illustrated in Fig. 8, the charging process of the electric vehicle may include the following steps:
S201. Charge the entire vehicle.
S202. Collect information such as the voltage and state of charge of the low-voltage battery.
S203. Determine whether the low-voltage battery is under-voltage. If yes, execute step S204; and if not, execute step S205.
S204. Start the second DC/DC converting circuit to charge the low-voltage battery.
S205. Apply low voltage to the entire vehicle.
S206. Collect information such as the voltage and state of charge of the power battery.
S207. Determine whether the power battery is over-voltage. If yes, execute step S208; and if not, execute step S209.
S208. Stop charging.
S209. Start the bidirectional AD/DC converting circuit and the first DC/DC converting circuit.
S210. Collect the voltage Ua of each battery module and calculate the average voltage Um of the plurality of balanced DC-DC converter modules.
S211. Determine whether Ua=Um is established. If yes, execute step S212; and if not, execute step S213.
S212. Perform no processing.
S213. Determine whether Ua > Um is established. If yes, execute step S214; and if not, re-execute step S212.
S214. The output current of the corresponding plurality of balanced DC-DC converter modules is Im+K^{∗}|Ua-Um|.
S215. Calculate PWM according to the output current to control the corresponding balanced DC-DC converter modules to work.
S216. Determine the number of the available balanced DC-DC converter modules and the total number of the balanced DC-DC converter modules.
S217. Collect the output voltage Ub and output current Ib of each balanced DC-DC converter module, and calculate the total supply current Isum to the low-voltage electric apparatuses.
S218. Control the second DC/DC converting circuit to stop working.

According to another embodiment of the present invention, the control module 40 is further configured to calculate the average voltage and average current of the plurality of balanced DC-DC converter modules BDCA by sampling the output voltage and output current of each balanced DC-DC converter module BDCA, and compare the average voltage with the voltage of each battery module 11. If the voltage of any battery module 11 is less than the average voltage, the control module 40 controls the balanced DC-DC converter module BDCA corresponding to the battery module 11 to reversely charge the battery module 11 according to the first current, where the first current = the average current Im+K^{∗}|Ua-Um|.

That is to say, in the charging process of the power battery 10, a reverse charging method may also be adopted to realize balancing and accelerate the charging efficiency at the same time. The specific balancing process is as follows: the voltage Ua of each battery module 11 is sampled through the sampling module 30, and the average voltage Um and the average output current Im of the plurality of balanced DC-DC converter modules BDCA are calculated. If Ua ≥ Um, it is balanced; and if Ua < Um, the battery module 11 is reversely charged, and the charging current is Im+K^{∗}|Ua-Um|.

Therefore, the energy management system of the electric vehicle provided by this embodiment of the present invention can realize dynamic active balancing of the power battery by adjusting the output current of the balanced DC-DC converter modules in the charging and discharging processes of the entire vehicle, the balancing ability is improved and the balancing current is adjustable; and since each battery module corresponds to one balanced DC-DC converter module, all battery modules that need to be balanced can be simultaneously balanced, so that the working efficiency is improved.

To sum up, in the energy management system of the electric vehicle according to this embodiment of the present invention, the power battery includes a plurality of battery modules, first ends of the balanced DC-DC converter modules are correspondingly connected to the battery modules, and second ends of the plurality of balanced DC-DC converter modules are connected in parallel to a low-voltage direct-current bus to respectively supply power to low-voltage electric apparatuses of the electric vehicle and charge a low-voltage battery through the low-voltage direct-current bus. An alternating-current end of the bidirectional car charger is configured to connect to a power grid/charging box, a first direct-current end is connected to the low-voltage direct-current bus, a second direct-current end is connected to a high-voltage direct-current bus, and the high-voltage direct-current bus is connected to the power battery. The control module separately controls each balanced DC-DC converter module according to the information collected by the sampling module to perform balancing management on the plurality of battery modules, supply power to the low-voltage electric apparatuses, and charge the low-voltage battery, and controls the bidirectional car charger to supply power to the low-voltage electric apparatuses and charge the low-voltage battery, thus the function of power supply to the low-voltage electric apparatuses of the entire vehicle, the power battery management function and the power battery charging function are realized, and circuit multiplex realizes bidirectional circulation of energy, so that the redundancy design of key functions of the system is realized, and the safety of the entire vehicle and the reliability of the system are improved.

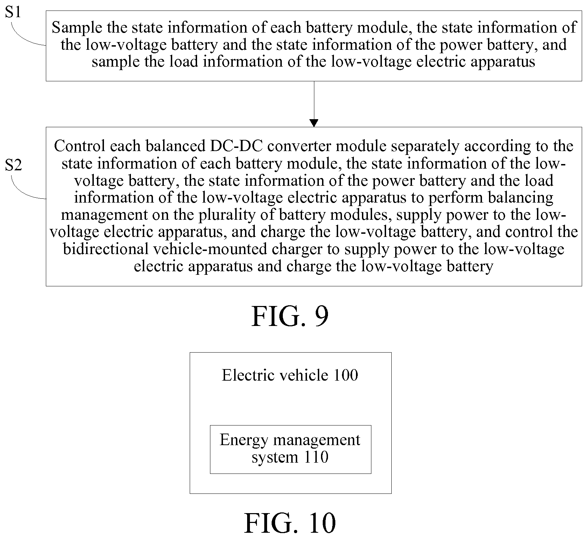

Fig. 9 is a flowchart of a control method for an energy management system of an electric vehicle according to an embodiment of the present invention.

It should be noted that, for details not disclosed in this embodiment of the control method for the energy management system of the electric vehicle in the present disclosure, reference may be made to the embodiment of the energy management system of the electric vehicle in the present disclosure.

In the embodiment of the present invention, the energy management system of the electric vehicle includes a power battery, a plurality of balanced DC-DC converter modules and a bidirectional car charger. The power battery includes a plurality of battery modules, first ends of the balanced DC-DC converter modules are correspondingly connected to the battery modules, second ends of the balanced DC-DC converter modules are connected in parallel to a low-voltage direct-current bus to respectively supply power to low-voltage electric apparatuses of the electric vehicle and charge a low-voltage battery through the low-voltage direct-current bus, an alternating-current end of the bidirectional car charger is configured to connect to a power grid/charging box, a first direct-current end of the bidirectional car charger is connected to the low-voltage direct-current bus, a second direct-current end of the bidirectional car charger is connected to a high-voltage direct-current bus, and the high-voltage direct-current bus is connected to the power battery.

As illustrated in Fig. 9, the control method for the energy management system of the electric vehicle includes the following steps:
S1. Sample the state information of each battery module, the state information of the low-voltage battery and the state information of the power battery, and sample the load information of the low-voltage electric apparatus.
S2. Control each balanced DC-DC converter module separately according to the state information of each battery module, the state information of the low-voltage battery, the state information of the power battery and the load information of the low-voltage electric apparatus to perform balancing management on the plurality of battery modules, supply power to the low-voltage electric apparatus, and charge the low-voltage battery, and control the bidirectional car charger to supply power to the low-voltage electric apparatus and charge the low-voltage battery.

The control method for the energy management system of the electric vehicle according to this embodiment of the present invention not only can realize the function that the high-voltage DC-DC converters supply power to the low-voltage electronic components and electric apparatuses of the entire vehicle, but also can realize the function of energy management on the power battery. At the same time, it can also supply power to the low-voltage electric apparatuses and charge the low-voltage battery through the bidirectional car charger, such that the electric vehicle no longer needs an independent high-voltage DC-DC converter configured to supply power to the low-voltage electronic components and electric apparatuses, and no longer needs a BMS with a special balancing circuit, and the redundancy design of the low-voltage power supply function is realized. In addition, due to the parallel power supply of the plurality of balanced DC-DC converter modules, when a small number of balanced DC-DC converter modules are damaged, it does not affect the power supply to the low-voltage electric apparatuses, thus improving the reliability of low-voltage power consumption of the entire vehicle. In addition, the plurality of balanced DC-DC converter modules can be miniaturized and installed separately, thus reducing the heating density, facilitating the simplification of heat dissipation solution, and facilitating the extension and compatibility.

According to an embodiment of the present invention, the bidirectional car charger includes a bidirectional AC/DC converting circuit, a first DC/DC converting circuit and a second DC/DC converting circuit, an alternating-current end of the bidirectional AC/DC converting circuit is the alternating-current end of the bidirectional car charger, a first direct-current end of the first DC/DC converting circuit is connected to the direct-current end of the bidirectional AC/DC converting circuit, a second direct-current end of the first DC/DC converting circuit is the second direct-current end of the bidirectional car charger, a first direct-current end of the second DC/DC converting circuit is separately connected to the direct-current end of the bidirectional AC/DC converting circuit and the first direct-current end of the first DC/DC converting circuit, and a second direct-current end of the second DC/DC converting circuit is the first direct-current end of the bidirectional car charger.

Herein, the bidirectional AC/DC converting circuit, the first DC/DC converting circuit and the second DC/DC converting circuit are controlled to realize any one of a power battery charging function, a low-voltage battery charging function, a power battery to alternating current inverting function, a low-voltage battery to alternating current inverting function and a power battery output low-voltage loading function.

Further, the bidirectional AC/DC converting circuit, the first DC/DC converting circuit and the second DC/DC converting circuit are controlled to realize the power battery charging function and the low-voltage battery charging function, or the power battery to alternating current inverting function and the power battery output low-voltage loading function, or the power battery to alternating current inverting function and the low-voltage battery to alternating current inverting function.

The control method for the energy management system of the electric vehicle according to this embodiment of the present invention can realize the functional diversification of the bidirectional car charger through the control on the multifunctional bidirectional AC/DC converting circuit, the first DC/DC converting circuit and the second DC/DC converting circuit, not only can work during parking and charging, but also can work when the entire vehicle is running, thus effectively improving the utilization rate of the bidirectional car charger, and avoiding the cost waste caused by idling.

According to an embodiment of the present invention, in the charging process of the electric vehicle, the bidirectional AC/DC converting circuit, the second DC/DC converting circuit and each balanced DC-DC converter module are further controlled such that each balanced DC-DC converter module charges the corresponding battery module and performs balancing management on the plurality of battery modules, and simultaneously the bidirectional AC/DC converting circuit and the first DC/DC converting circuit are controlled to charge the power battery.

Further, in the inverting-discharging process of the electric vehicle, the first DC/DC converting circuit and the bidirectional AC/DC converting circuit are further controlled to realize the power battery to alternating current inverting function and/or the plurality of balanced DC-DC converter modules, the second DC/DC converting circuit and the bidirectional AC/DC converting circuit are controlled to realize the power battery to alternating current inverting function, where when the plurality of balanced DC-DC converter modules, the second DC/DC converting circuit and the bidirectional AC/DC converting circuit are controlled to realize the power battery to alternating current inverting function, the balancing management on the plurality of battery modules is further realized.

Therefore, the control method for the energy management system of the electric vehicle according to this embodiment of the present invention can enable the energy management system to simultaneously have the functions of intelligent balancing and bidirectional inversion, and can realize charging of a single battery module in the power battery, and can also charge the entire power battery. When a single battery module is damaged, it does not affect the overall function, thus the redundancy design of key functions is realized, the reliability of the entire vehicle is improved, and the charging power can be doubled.

According to an embodiment of the present invention, in the discharging process of the electric vehicle, whether the low-voltage battery is in an under-voltage state is further determined according to the state information of the low-voltage battery, where if the low-voltage battery is in an under-voltage state, the plurality of balanced DC-DC converter modules are controlled to charge the low-voltage battery; if the low-voltage battery is not in an under-voltage state, whether the power battery is in an under-voltage state is further determined according to the state information of the power battery; and if the power battery is in an under-voltage state, the power battery is prohibited from discharging.

Further, when the power battery is not in an under-voltage state, the power battery is controlled to supply power to the electric vehicle, the plurality of balanced DC-DC converter modules are controlled to supply power to the low-voltage electric apparatuses, the output voltage and output current of each balanced DC-DC converter module are sampled, and the total supply current to the low-voltage electric apparatuses is calculated.

According to an embodiment of the present invention, a maximum allowable supply current of the plurality of balanced DC-DC converter modules is further calculated according to the output current of each balanced DC-DC converter module, and whether the output voltage of each balanced DC-DC converter module is pulled down and whether the total supply current to the low-voltage electric apparatuses exceeds the maximum allowable supply current are determined, where if the output voltage of each balanced DC-DC converter module is pulled down and the total supply current to the low-voltage electric apparatuses exceeds the maximum allowable supply current, the first DC/DC converting circuit and the second DC/DC converting circuit are controlled such that the power battery simultaneously supplies power to the low-voltage electric apparatuses, and when an alternating current discharging demand instruction is received, the bidirectional AC/DC converting circuit is controlled to work such that the power battery performs alternating current discharging simultaneously through the first DC/DC converting circuit and the bidirectional AC/DC converting circuit.

Further, according to an embodiment of the present invention, the control method for the energy management system of the electric vehicle further includes: calculating the average voltage and average current of the plurality of balanced DC-DC converter modules, and comparing the average voltage with the voltage of each battery module; if the average voltage is equal to the voltage of any battery module, controlling the balanced DC-DC converter module corresponding to the battery module to output with the average current; if the voltage of any battery module is greater than the average voltage, controlling the balanced DC-DC converter module corresponding to the battery module to output with first current, where the first current = the average current Im+K^{∗}|Ua-Um|, Ua is the voltage of the battery module, Um is the average voltage, and K is an adjustment coefficient; and if the voltage of any battery module is less than the average voltage, controlling the balanced DC-DC converter module corresponding to the battery module to output with second current, where the second current = the average current Im-K^{∗}|Ua-Um|.

According to an embodiment of the present invention, in the charging process of the electric vehicle, whether the low-voltage battery is in an under-voltage state is further determined according to the state information of the low-voltage battery, where if the low-voltage battery is in an under-voltage state, the bidirectional AC/DC converting circuit and the second DC/DC converting circuit are controlled such that the power grid/charging box charges the low-voltage battery through the bidirectional AC/DC converting circuit and the second DC/DC converting circuit; and if the low-voltage battery is not in an under-voltage state, whether the power battery needs to be charged is further determined according to the state information of the power battery, and when the power battery needs to be charged, the bidirectional AC/DC converting circuit and the first DC/DC converting circuit are controlled such that the power grid/charging box charges the power battery through the bidirectional AC/DC converting circuit and the first DC/DC converting circuit.

Further, the control method for the energy management system of the electric vehicle further includes: calculating the average voltage and average current of the plurality of balanced DC-DC converter modules by sampling the output voltage and output current of each balanced DC-DC converter module, and comparing the average voltage with the voltage of each battery module; and if the voltage of any battery module is greater than the average voltage, controlling the balanced DC-DC converter module corresponding to the battery module to output with the first current, where the first current = the average current Im+K^{∗}|Ua-Um|.

According to an embodiment of the present invention, the control method for the energy management system of the electric vehicle further includes: calculating the discharge current of the plurality of balanced DC-DC converter modules according to the output current of each balanced DC-DC converter module, calculating the total supply current to the low-voltage electric apparatuses, and when the discharge current of the plurality of balanced DC-DC converter modules is greater than the total supply current, controlling the second DC/DC converting circuit to stop working.

According to another embodiment of the present invention, the control method for the energy management system of the electric vehicle further includes: calculating the average voltage and average current of the plurality of balanced DC-DC converter modules by sampling the output voltage and output current of each balanced DC-DC converter module, and comparing the average voltage with the voltage of each battery module; and if the voltage of any battery module is less than the average voltage, controlling the balanced DC-DC converter module corresponding to the battery module to reversely charge the battery module with the first current, where the first current = the average current Im+K^{∗}|Ua-Um|.

Therefore, the control method for the energy management system of the electric vehicle according to this embodiment of the present invention can realize dynamic active balancing of the power battery by adjusting the output current of the balanced DC-DC converter modules in the charging and discharging processes of the entire vehicle, the balancing ability is improved and the balancing current is adjustable; and since each battery module corresponds to one balanced DC-DC converter module, all battery modules that need to be balanced can be simultaneously balanced, so that the working efficiency is improved.

To sum up, in the control method for the energy management system of the electric vehicle according to this embodiment of the present invention, the state information of each battery module, the state information of the low-voltage battery, the state information of the power battery and the load information of the low-voltage electric apparatuses are sampled; then each balanced DC-DC converter module is separately controlled according to the state information of each battery module, the state information of the low-voltage battery, the state information of the power battery and the load information of the low-voltage electric apparatuses to perform balancing management on the plurality of battery modules, supply power to the low-voltage electric apparatuses, and charge the low-voltage battery, the bidirectional car charger is controlled to supply power to the low-voltage electric apparatuses and charge the low-voltage battery, thus the function of power supply to the low-voltage electric apparatuses of the entire vehicle, the power battery management function and the power battery charging function are realized, and circuit multiplexing realizes bidirectional circulation of energy, so that the redundancy design of key functions of the system is realized, and the safety of the entire vehicle and the reliability of the system are improved.

Fig. 10 is an energy management system of an electric vehicle according to an embodiment of the present invention. As illustrated in Fig. 10, the electric vehicle 100 includes the energy management system 110 of the electric vehicle described in Fig. 1-6, which is not described here.

The electric vehicle provided by this embodiment of the present invention, by adopting the energy management system of the electric vehicle, can realize the function of power supply to the low-voltage electric apparatuses of the entire vehicle, the power battery management function and the power battery charging function, and circuit multiplexing realizes bidirectional circulation of energy, so that the redundancy design of key functions of the system is realized, and the safety of the entire vehicle and the reliability of the system are improved.

In addition, the terms such as "first" and "second" are used only for the purpose of description, and should not be understood as indicating or implying the relative importance or implicitly specifying the number of the indicated technical features. Therefore, a feature restricted by "first " or "second" may explicitly indicate or implicitly include at least one of such features. In the descriptions of the present invention, unless otherwise specified, "multiple" means two or more than two.

In the present invention, unless otherwise explicitly specified and defined, terms such as "mount", "connect", "connection" and "fix" should be understood broadly, which, for example, may be a fixed connection, or may be a detachable connection, or an integral connection; or may be a mechanical connection, or may be an electrical connection, or may be mutual communication; or may be a direct connection, or may be an indirect connection by using a medium, or may be an internal communication between two components, or may be an interactive relationship between two components. A person of ordinary skill in the art can understand specific meanings of the foregoing terms in the present invention according to a specific situation.

In the description of this description, the description with reference to the terms "an embodiment", "some embodiments", "examples", "specific examples", or "some examples" means that the specific features, structures, materials or features described in connection with the embodiment or example are included in at least one embodiment or example of the present invention. In this description, the exemplary expression of the above-mentioned terms need not be directed at the same embodiment or example. In addition, the specific features, structures, materials or features described may be combined in an appropriate manner in any one or more embodiments or examples. Besides, under the situation of no mutual contradiction, those skilled in the art may combine different embodiments or examples described in this description and the features of different embodiments or examples.

Although the embodiments of the present invention have been shown and described above, it can be understood that the above-mentioned embodiments are exemplary and shall not be construed as limitations to the present invention, and those skilled in the art may change, modify, replace and vary the above-mentioned embodiments within the scope of the present invention.

## Claims

1. An energy management system of an electric vehicle, comprising:
a power battery, the power battery comprising a plurality of battery modules;
a plurality of balanced DC-DC converter modules, first ends of the balanced DC-DC converter modules being correspondingly connected to the battery modules, and second ends of the balanced DC-DC converter modules being connected in parallel to a low-voltage direct-current bus to respectively supply power to low-voltage electric apparatuses of the electric vehicle and charge a low-voltage battery through the low-voltage direct-current bus;
a bidirectional car charger, an alternating-current end of the bidirectional car charger being configured to connect to a power grid/charging box, a first direct-current end of the bidirectional car charger being connected to the low-voltage direct-current bus, and a second direct-current end of the bidirectional car charger being connected to a high-voltage direct-current bus, wherein the high-voltage direct-current bus is connected to the power battery;
a sampling module, the sampling module being configured to sampling state information of each battery module, state information of the low-voltage battery, state information of the power battery and load information of the low-voltage electric apparatuses; and
a control module, configured to separately control each balanced DC-DC converter module according to the state information of each battery module, the state information of the low-voltage battery, the state information of the power battery and the load information of the low-voltage electric apparatuses to perform balancing management on the plurality of battery modules, supply power to the low-voltage electric apparatuses, and charge the low-voltage battery, and controlling the bidirectional car charger to supply power to the low-voltage electric apparatuses and charge the low-voltage battery.

2. The energy management system of the electric vehicle according to claim 1, wherein the plurality of balanced DC-DC converter modules, the sampling module and the control module are integrated into a battery management system.

3. The energy management system of the electric vehicle according to claim 1 or 2, wherein the bidirectional car charger comprises:
a bidirectional AC/DC converting circuit, an alternating-current end of the bidirectional AC/DC converting circuit being the alternating-current end of the bidirectional car charger;
a first DC/DC converting circuit, a first direct-current end of the first DC/DC converting circuit being connected to the direct-current end of the bidirectional AC/DC converting circuit, and a second direct-current end of the first DC/DC converting circuit being the second direct-current end of the bidirectional car charger; and
a second DC/DC converting circuit, a first direct-current end of the second DC/DC converting circuit being separately connected to the direct-current end of the bidirectional AC/DC converting circuit and the first direct-current end of the first DC/DC converting circuit, and a second direct-current end of the second DC/DC converting circuit being the first direct-current end of the bidirectional car charger, wherein
the control module controls the bidirectional AC/DC converting circuit, the first DC/DC converting circuit and the second DC/DC converting circuit to realize any one of a power battery charging function, a low-voltage battery charging function, a power battery to alternating current inverting function, a low-voltage battery to alternating current inverting function and a power battery output low-voltage loading function.

4. The energy management system of the electric vehicle according to claim 3, wherein the control module is further configured to control the bidirectional AC/DC converting circuit, the first DC/DC converting circuit and the second DC/DC converting circuit to realize the power battery charging function and the low-voltage battery charging function, or the power battery to alternating current inverting function and the power battery output low-voltage loading function, or the power battery to alternating current inverting function and the low-voltage battery to alternating current inverting function.

5. The energy management system of the electric vehicle according to claim 3 or 4, wherein the control module is further configured to, in the charging process of the electric vehicle, control the bidirectional AC/DC converting circuit, the second DC/DC converting circuit and each balanced DC-DC converter module such that each balanced DC-DC converter module charges the corresponding battery module and performs balancing management on the plurality of battery modules, and simultaneously control the bidirectional AC/DC converting circuit and the first DC/DC converting circuit to charge the power battery.

6. The energy management system of the electric vehicle according to any one of claims 3-5, wherein the control module is further configured to, in the inverting-discharging process of the electric vehicle, control the first DC/DC converting circuit and the bidirectional AC/DC converting circuit to realize the power battery to alternating current inverting function and/or control the plurality of balanced DC-DC converter modules, the second DC/DC converting circuit and the bidirectional AC/DC converting circuit to realize the power battery to alternating current inverting function, wherein when the plurality of balanced DC-DC converter modules, the second DC/DC converting circuit and the bidirectional AC/DC converting circuit are controlled to realize the power battery to alternating current inverting function, the balancing management on the plurality of battery modules is further realized.

7. The energy management system of the electric vehicle according to claim 3, wherein the control module is further configured to, in the discharging process of the electric vehicle, determine whether the low-voltage battery is in an under-voltage state according to the state information of the low-voltage battery, wherein
if the low-voltage battery is in an under-voltage state, the control module controls the plurality of balanced DC-DC converter modules to charge the low-voltage battery;
if the low-voltage battery is not in an under-voltage state, the control module further determines whether the power battery is in an under-voltage state according to the state information of the power battery; and
if the power battery is in an under-voltage state, the control module prohibits the power battery from discharging.

8. The energy management system of the electric vehicle according to claim 7, wherein the control module is further configured to, when the power battery is not in an under-voltage state, control the power battery to supply power to the electric vehicle, control the plurality of balanced DC-DC converter modules to supply power to the low-voltage electric apparatuses, sample the output voltage and output current of each balanced DC-DC converter module, and calculate the total supply current to the low-voltage electric apparatuses.

9. The energy management system of the electric vehicle according to claim 8, wherein the control module is further configured to calculate a maximum allowable supply current of the plurality of balanced DC-DC converter modules according to the output current of each balanced DC-DC converter module, and determine whether the output voltage of each balanced DC-DC converter module is pulled down and whether the total supply current to the low-voltage electric apparatuses exceeds the maximum allowable supply current, wherein
if the output voltage of each balanced DC-DC converter module is pulled down and the total supply current to the low-voltage electric apparatuses exceeds the maximum allowable supply current, the control module controls the first DC/DC converting circuit and the second DC/DC converting circuit such that the power battery simultaneously supplies power to the low-voltage electric apparatuses, and when an alternating current discharging demand instruction is received, controls the bidirectional AC/DC converting circuit to work such that the power battery performs alternating current discharging simultaneously through the first DC/DC converting circuit and the bidirectional AC/DC converting circuit.

10. The energy management system of the electric vehicle according to claim 8, wherein the control module is further configured to calculate the average voltage and average current of the plurality of balanced DC-DC converter modules, and compare the average voltage with the voltage of each battery module, wherein
if the average voltage is equal to the voltage of any battery module, the control module controls the balanced DC-DC converter module corresponding to the battery module to output with the average current;
if the voltage of any battery module is greater than the average voltage, the control module controls the balanced DC-DC converter module corresponding to the battery module to output with first current, wherein the first current = the average current Im+K^{∗}|Ua-Um|, Ua is the voltage of the battery module, Um is the average voltage, and K is an adjustment coefficient; and
if the voltage of any battery module is less than the average voltage, the control module controls the balanced DC-DC converter module corresponding to the battery module to output with second current, wherein the second current = the average current Im-K^{∗}|Ua-Um|, Ua is the voltage of the battery module, Um is the average voltage, and K is an adjustment coefficient.

11. The energy management system of the electric vehicle according to claim 3, wherein the control module is further configured to, in the charging process of the electric vehicle, determine whether the low-voltage battery is in an under-voltage state according to the state information of the low-voltage battery, wherein
if the low-voltage battery is in an under-voltage state, the control module controls the bidirectional AC/DC converting circuit and the second DC/DC converting circuit such that the power grid/charging box charges the low-voltage battery through the bidirectional AC/DC converting circuit and the second DC/DC converting circuit; and
if the low-voltage battery is not in an under-voltage state, the control module further determines whether the power battery needs to be charged according to the state information of the power battery, and when the power battery needs to be charged, controls the bidirectional AC/DC converting circuit and the first DC/DC converting circuit such that the power grid/charging box charges the power battery through the bidirectional AC/DC converting circuit and the first DC/DC converting circuit.

12. The energy management system of the electric vehicle according to claim 11, wherein the control module is further configured to calculate the average voltage and average current of the plurality of balanced DC-DC converter modules by sampling the output voltage and output current of each balanced DC-DC converter module, and compare the average voltage with the voltage of each battery module, wherein
if the voltage of any battery module is greater than the average voltage, the control module controls the balanced DC-DC converter module corresponding to the battery module to output with the first current, wherein the first current = the average current Im+K^{∗}|Ua-Um|, Ua is the voltage of the battery module, Um is the average voltage, and K is an adjustment coefficient.

13. The energy management system of the electric vehicle according to claim 12, wherein the control module is further configured to calculate the discharge current of the plurality of balanced DC-DC converter modules according to the output current of each balanced DC-DC converter module, calculate the total supply current to the low-voltage electric apparatuses, and when the discharge current of the plurality of balanced DC-DC converter modules is greater than the total supply current, control the second DC/DC converting circuit to stop working.

14. The energy management system of the electric vehicle according to claim 11, wherein the control module is further configured to calculate the average voltage and average current of the plurality of balanced DC-DC converter modules by sampling the output voltage and output current of each balanced DC-DC converter module, and compare the average voltage with the voltage of each battery module, wherein
if the voltage of any battery module is less than the average voltage, the control module controls the balanced DC-DC converter module corresponding to the battery module to reversely charge the battery module with the first current, wherein the first current = the average current Im+K^{∗}|Ua-Um|, Ua is the voltage of the battery module, Um is the average voltage, and K is an adjustment coefficient.

15. An electric vehicle, comprising the energy management system of the electric vehicle according to any one of claims 1-14.

16. A control method for an energy management system of an electric vehicle, wherein the energy management system of the electric vehicle comprises a power battery, a plurality of balanced DC-DC converter modules and a bidirectional car charger, the power battery comprises a plurality of battery modules, first ends of the balanced DC-DC converter modules are correspondingly connected to the battery modules, second ends of the balanced DC-DC converter modules are connected in parallel to a low-voltage direct-current bus to respectively supply power to low-voltage electric apparatuses of the electric vehicle and charge a low-voltage battery through the low-voltage direct-current bus, an alternating-current end of the bidirectional car charger is configured to connect to a power grid/charging box, a first direct-current end of the bidirectional car charger is connected to the low-voltage direct-current bus, a second direct-current end of the bidirectional car charger is connected to a high-voltage direct-current bus, the high-voltage direct-current bus is connected to the power battery, and the method comprises the following steps:
sampling the state information of each battery module, the state information of the low-voltage battery and the state information of the power battery, and sampling the load information of the low-voltage electric apparatuses; and
respectively controlling each balanced DC-DC converter module according to the state information of each battery module, the state information of the low-voltage battery, the state information of the power battery and the load information of the low-voltage electric apparatuses to perform balancing management on the plurality of battery modules, supply power to the low-voltage electric apparatuses, and charge the low-voltage battery, and controlling the bidirectional car charger to supply power to the low-voltage electric apparatuses and charge the low-voltage battery.

17. The method according to claim 16, wherein the bidirectional car charger comprises a bidirectional AC/DC converting circuit, a first DC/DC converting circuit and a second DC/DC converting circuit, an alternating-current end of the bidirectional AC/DC converting circuit is the alternating-current end of the bidirectional car charger, a first direct-current end of the first DC/DC converting circuit is connected to the direct-current end of the bidirectional AC/DC converting circuit, a second direct-current end of the first DC/DC converting circuit is the second direct-current end of the bidirectional car charger, a first direct-current end of the second DC/DC converting circuit is separately connected to the direct-current end of the bidirectional AC/DC converting circuit and the first direct-current end of the first DC/DC converting circuit, a second direct-current end of the second DC/DC converting circuit is the first direct-current end of the bidirectional car charger, and the method further comprises:
controlling the bidirectional AC/DC converting circuit, the first DC/DC converting circuit and the second DC/DC converting circuit to realize any one of a power battery charging function, a low-voltage battery charging function, a power battery to alternating current inverting function, a low-voltage battery to alternating current inverting function and a power battery output low-voltage loading function.

18. The method according to claim 17, further comprising:
controlling the bidirectional AC/DC converting circuit, the first DC/DC converting circuit and the second DC/DC converting circuit to realize the power battery charging function and the low-voltage battery charging function, or the power battery to alternating current inverting function and the power battery output low-voltage loading function, or the power battery to alternating current inverting function and the low-voltage battery to alternating current inverting function.

19. The method according to claim 17, wherein in the charging process of the electric vehicle, the bidirectional AC/DC converting circuit, the second DC/DC converting circuit and each balanced DC-DC converter module are further controlled such that each balanced DC-DC converter module charges the corresponding battery module and performs balancing management on the plurality of battery modules, and simultaneously the bidirectional AC/DC converting circuit and the first DC/DC converting circuit are controlled to charge the power battery.

20. The method according to claim 17, wherein in the inverting-discharging process of the electric vehicle, the first DC/DC converting circuit and the bidirectional AC/DC converting circuit are further controlled to realize the power battery to alternating current inverting function and/or the plurality of balanced DC-DC converter modules, the second DC/DC converting circuit and the bidirectional AC/DC converting circuit are controlled to realize the power battery to alternating current inverting function, wherein when the plurality of balanced DC-DC converter modules, the second DC/DC converting circuit and the bidirectional AC/DC converting circuit are controlled to realize the power battery to alternating current inverting function, the balancing management on the plurality of battery modules is further realized.

21. The method according to claim 17, wherein in the discharging process of the electric vehicle, whether the low-voltage battery is in an under-voltage state is further determined according to the state information of the low-voltage battery, wherein
if the low-voltage battery is in an under-voltage state, the plurality of balanced DC-DC converter modules are controlled to charge the low-voltage battery;
if the low-voltage battery is not in an under-voltage state, whether the power battery is in an under-voltage state is further determined according to the state information of the power battery; and
if the power battery is in an under-voltage state, the power battery is prohibited from discharging.

22. The method according to claim 21, wherein when the power battery is not in an under-voltage state, the power battery is controlled to supply power to the electric vehicle, the plurality of balanced DC-DC converter modules are controlled to supply power to the low-voltage electric apparatuses, the output voltage and output current of each balanced DC-DC converter module are sampled, and the total supply current to the low-voltage electric apparatuses is calculated.

23. The method according to claim 22, wherein a maximum allowable supply current of the plurality of balanced DC-DC converter modules is further calculated according to the output current of each balanced DC-DC converter module, and whether the output voltage of each balanced DC-DC converter module is pulled down and whether the total supply current to the low-voltage electric apparatuses exceeds the maximum allowable supply current are determined, wherein
if the output voltage of each balanced DC-DC converter module is pulled down and the total supply current to the low-voltage electric apparatuses exceeds the maximum allowable supply current, the first DC/DC converting circuit and the second DC/DC converting circuit are controlled such that the power battery simultaneously supplies power to the low-voltage electric apparatuses, and when an alternating current discharging demand instruction is received, the bidirectional AC/DC converting circuit is controlled to work such that the power battery performs alternating current discharging simultaneously through the first DC/DC converting circuit and the bidirectional AC/DC converting circuit.

24. The method according to claim 22, further comprising:
calculating the average voltage and average current of the plurality of balanced DC-DC converter modules, and comparing the average voltage with the voltage of each battery module;
if the average voltage is equal to the voltage of any battery module, controlling the balanced DC-DC converter module corresponding to the battery module to output with the average current;
if the voltage of any battery module is greater than the average voltage, controlling the balanced DC-DC converter module corresponding to the battery module to output with first current, wherein the first current = the average current Im+K^{∗}|Ua-Um|, Ua is the voltage of the battery module, Um is the average voltage, and K is an adjustment coefficient; and
if the voltage of any battery module is less than the average voltage, controlling the balanced DC-DC converter module corresponding to the battery module to output with second current, wherein the second current = the average current Im-K^{∗}|Ua-Um|, Ua is the voltage of the battery module, Um is the average voltage, and K is an adjustment coefficient.

25. The method according to claim 17, wherein in the charging process of the electric vehicle, whether the low-voltage battery is in an under-voltage state is further determined according to the state information of the low-voltage battery, wherein
if the low-voltage battery is in an under-voltage state, the bidirectional AC/DC converting circuit and the second DC/DC converting circuit are controlled such that the power grid/charging box charges the low-voltage battery through the bidirectional AC/DC converting circuit and the second DC/DC converting circuit; and
if the low-voltage battery is not in an under-voltage state, whether the power battery needs to be charged is further determined according to the state information of the power battery, and when the power battery needs to be charged, the bidirectional AC/DC converting circuit and the first DC/DC converting circuit are controlled such that the power grid/charging box charges the power battery through the bidirectional AC/DC converting circuit and the first DC/DC converting circuit.

26. The method according to claim 25, further comprising:
calculating the average voltage and average current of the plurality of balanced DC-DC converter modules by sampling the output voltage and output current of each balanced DC-DC converter module, and comparing the average voltage with the voltage of each battery module; and
if the voltage of any battery module is greater than the average voltage, controlling the balanced DC-DC converter module corresponding to the battery module to output with the first current, wherein the first current = the average current Im+K^{∗}|Ua-Um|, Ua is the voltage of the battery module, Um is the average voltage, and K is an adjustment coefficient.

27. The method according to claim 26, further comprising:
calculating the discharge current of the plurality of balanced DC-DC converter modules according to the output current of each balanced DC-DC converter module, calculating the total supply current to the low-voltage electric apparatuses, and when the discharge current of the plurality of balanced DC-DC converter modules is greater than the total supply current, controlling the second DC/DC converting circuit to stop working.

28. The method according to claim 25, further comprising:
calculating the average voltage and average current of the plurality of balanced DC-DC converter modules by sampling the output voltage and output current of each balanced DC-DC converter module, and comparing the average voltage with the voltage of each battery module; and
if the voltage of any battery module is less than the average voltage, controlling the balanced DC-DC converter module corresponding to the battery module to reversely charge the battery module with the first current, wherein the first current = the average current Im+K^{∗}|Ua-Um|, Ua is the voltage of the battery module, Um is the average voltage, and K is an adjustment coefficient.
